# EUROPEAN PATENT SPECIFICATION

(11) **EP 0 822 410 B1**
(45) Date of publication and mention of the grant of the patent: **16.04.2003**
(21) Application number: 97113135.4
(22) Date of filing: 30.07.1997
(51) Int. Cl.: G01N 27/407

(54) **Oxygen concentration sensor**
Sauerstoffkonzentrationssensor
Détecteur de concentration d'oxygène

(30) Priority: 30.07.1996 JP 20059296; 07.07.1997 JP 18143497
(43) Date of publication of application: 04.02.1998
(73) Proprietor: DENSO CORPORATION, Kariya-City Aichi-Pref. 448 (JP)
(72) Inventor: Sakawa, Toshihiro, Kariya-shi, Aichi 448 (JP); Hayashi, Hidetaka, Kariya-shi, Aichi 448 (JP)
(74) Representative: Kuhnen & Wacker

(56) References cited:
- DE-A- 2 348 505
- US-A- 4 323 440
- US-A- 5 238 552

## Description

### 1. Field of the Invention

This invention relates to an oxygen concentration sensor according to the preamble of claim 1.

### 2. Related Art

From DE-A-23 48 505 an electro chemical sensor is known for determining the oxygen concentration within exhaust gases, in particular within exhaust gases of internal combustion engines, comprising a ion conducting fixed electrolyte tube having a bottom and the inner side of which includes an electron contacting path extending into the range of the bottom and provided with a connection member and also exposed to the air of the environment, and comprising also an outer side provided with an electron conducting catalytic layer facing towards the exhaust gases and connected to mass through a metallic sensor housing, and the portion, which is exposed to the exhaust gases, is surrounded by a protection means, arranged in a spaced relationship around the fixed electrolyte tube. Said member is projecting beyond the bottom side end of the fixed electrolyte tube and comprises at least one opening for an intake or exhaust of exhaust gases. The openings are provided with deflection means, which are guiding the exhaust gases to the fixed electrolyte tube but are protecting the fixed electrolyte tube against a direct strike of the exhaust gases. According to this known sensor the protection means comprises two coaxially arranged covers, which are spaced one from the other and provided with openings, the openings of the outer cover being displaced with respect to the openings of the inner cover such that they are not overlapping.

From US-A-5,238,552 a sensor element is known with which a bottomed inner cylindrical member is placed around the sensor element, and a bottomed outer cylindrical member is located around this inner cylinder. The inner cylinder includes a hole at a location opposite to the electrode of the sensor element, and the outer cylinder includes holes at locations that are not opposite to the hole. Between the inner and outer cylinders there is a gap wide enough to prevent water from staying there between due to surface tension. Water entering the sensor assembly through the holes in the outer cylinder is immediately discharged out of the holes through the gap between the outer and inner cylinders. Water, even when entering the outer cylinder, is unlikely to impinge directly on the sensor element built in the inner cylinder.

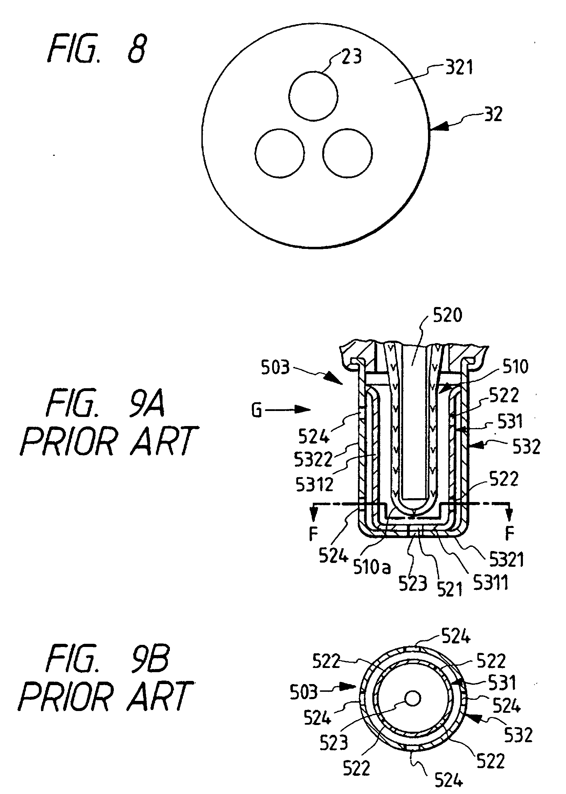

From US-A-4,323,440 an oxygen sensor for measuring the existence of oxygen in gases in an exhaust system or the like is known. An electrolytic body is formed as a tube with an open end and a closed end. An internal electrode is coated on the interior surface of the electrolytic body, and an external electrode is coated on the exterior surface of the electrolytic body. The external electrode is exposed to the gases. A tubular housing is airtightly connected around the outer circumference of the open end of the tubular electrolytic body, thus defining within it an internal space to which the internal electrode is exposed. An electrically conducting tube coaxial with the tubular housing is electrically connected to the internal electrode by its end closest thereto. Atmospheric air can only pass into the space within the tubular housing through a side hole in the housing, which opposes a side hole in the electrically conducting tube. Between these holes there is located a blocking member, which includes a tube formed of an elastomeric material formed with a side hole, which corresponds to the other side holes, and a tube formed of a water repelling porous material, the part of which opposes the side holes, and which is not formed with any holes so that it acts as a filter. One of these tubes is fitted inside the other. A lead wire connects to the other end of the electrically conducting tube and leads out from the sensor to convey electrical output signals therefrom. A protective shield is mounted over the outside of the side hole in the housing, and does not interrupt communication between this hole and the atmosphere, while it shields this hole from direct exposure to the exterior. Figs. 9A and 9B show a conventional oxygen concentration sensor detecting an oxygen concentration of intake or exhaust gas (hereinafter simply referred to as gas). An oxygen concentration sensor 503 comprises a sensor element 510 and a heater unit 520. The heater unit 520 generates heat to increase the temperature of sensor element 510 up to an active temperature (e. g., 650°C) of the sensor element 510. The sensor element 510 is surrounded by inner and outer cylindrical covers 531 and 532 constructed into a cup-like shape. These inner and outer cylindrical covers 531 and 532 are provided with a plurality of gas holes 521, 522, 523 and 524 that allow the intake or exhaust gas to pass through these covers 531 and 532 and enter inside thereof. The function of inner and outer cylindrical covers 531 and 532 is not only protecting the sensor element 510 from being exposed to water and harmful substances, such as lead compounds or the like, but also keeping the sensor element 10 warm when heated by the heater unit 520.

The above-described active temperature is higher than the temperature of the above-described gas. In general, the temperature of the intake gas is in a range of 80-140°C, while the temperature of the exhaust gas is in a range of 100-500°C. To keep the sensor element 510 warm after the sensor element 510 is heated to such a high temperature, it is desirable to suppress an entire area of the opening of gas holes 521, 522, 523 and 524 within a smaller value. A total of eight gas holes 522 are opened on the cylindrical side wall 5312 of the inner cover 531. The same number of gas holes 524 are opened on the cylindrical side wall 5322 of the outer cover 532. The size of these gas holes 522 and 524 is approximately 1.5 mm in diameter. Two gas holes 521 and 523 are opened on respective bottoms 5311 and 5321. The size of these gas holes 521 and 523 is approximately 2.0 mm in diameter.

Many of this type of conventional oxygen concentration sensors have been applied to gasoline engines. According to the inventors of the present invention, it was confirmed that a response of the sensor element 510 was worsened greatly during a short duration when the above-described conventional oxygen concentration sensor 503 was applied to a diesel engine.

Hereinafter, the causes of worsening the response of sensor element 510 when used for diesel engines will be explained based on the facts confirmed in experiments and studies conducted by the inventors.

First, the gas of a diesel engine contains a greater amount of unburned substances, such as tin, compared with the gas of a gasoline engine. A gas flowing direction is generally normal to the axial direction of the oxygen concentration sensor 503, as indicated by an arrow G. According to such an arrangement of the oxygen concentration sensor 503, the above-described unburned substances flow perpendicularly to the outer cover 532 and are deposited on the outer surface of the outer cover 532.

Thus, a deposition of the unburned substances is formed on the outer cylindrical surface of the outer cover 532 in a wide region including the side gas holes 524 opened on the side wall 5322. Undesirably, the deposition of the unburned substances possibly reduces the open area of each side gas hole 524 or completely closes the opening of each gas hole 524. This makes it difficult to smoothly introduce or guide the gas toward the sensor element 510 provided inside the outer cover 532 As a result, the response of sensor element 510 is significantly worsened. Furthermore, the following problems were confirmed according to the experiments conducted by the inventors.

The above-described unburned substances possibly pass through the side gas holes 524 formed on the side wall 5322 of the outer cover 532. The unburned substances may be deposited on the surface of the inner cover 531 whose temperature is still in a low temperature range (e.g., less than approximately 300 °C). Then, the above-described unburned substances will be burned after the inner cover 531 is heated up to a high temperature (e.g., approximately 300°C). Due to this burning, oxygen is consumed in the vicinity of the sensor element 510. Such an unexpected consumption of oxygen gives an adverse influence to the detection of the oxygen concentration. The detection value of the oxygen concentration becomes smaller than a true value to be detected when there is no burning on the inner cover 531. Thus, the sensor element 510 may produce an erroneous sensing value.

Moreover, there is a possibility that the unburned substances, once passing through the gas holes 524, are not burned on the surface of the inner cover 531. In this case, the unburned substances further enter inside the inner cover 531 through the gas holes 522 and are deposited on the surface of sensor element 510. This possibly deteriorates the sensor element 510. And, the response of sensor element 510 is worsened.

### SUMMARY OF THE INVENTION

Accordingly, in view of above-described problems encountered in the related art, a principal object of the present invention is to provide an oxygen concentration sensor with a sensor element covered by inner and outer covers, capable of effectively preventing the unburned substances from being deposited on the surface of the outer cover in the vicinity of the gas holes as well as preventing the unburned substances from passing through these gas holes and entering inside the outer cover.

According to the present invention this object is solved by the features of claim 1.

Improved embodiment of the inventive oxygen concentration sensor result from the subclaims.

The present invention provides an oxygen concentration sensor having various aspects, which will be described hereinafter.

The reference numerals in parentheses show the correspondence to the components described in preferred embodiments of the present invention described later. The reference numerals in parentheses, added in the following description, are thus merely used for the purpose of expediting the understanding to the present invention and not used for narrowly interpreting the scope of the present invention.

According to the present invention, an oxygen concentration sensor comprises a sensor element (10) with a distal end (10a) having a gas-sensing portion (11) detecting an oxygen concentration of intake or exhaust gas. The gas-sensing portion (11) is covered by cup-like element covers (31, 32) having bottoms (311, 321) facing the distal end (10a) of the sensor element (10). The element covers (31, 32) comprise an inner cover (31) disposed closely to the sensor element (10) and an outer cover (32) disposed outside the inner cover (31) and directly exposed to the intake or exhaust gas. And, the outer cover (32) is provided with a gas hole (23) only at the bottom (321) thereof. The gas hole (23) introduces the gas inside the outer cover (31).

The diameter of the gas hole (23) opened on the bottom (321) can be enlarged by an amount equivalent to an eliminated area of gas holes (524) on the side wall (5322) of the outer cover (532) of the above-described prior art, while maintaining the heat retaining property of the sensor element (10) set forth in the above-described prior art. Thus, the gas can be sufficiently introduced into the sensor element (10) for accurately detecting the oxygen concentration.

According to the layout of the oxygen concentration sensor (1), a gas flowing direction is substantially normal to the axis of the sensor element (10). The unburned substances involved in the gas will collide with the side wall (322) of the outer cover (32) perpendicularly. The gas hole (23) is provided only at the bottom (321) of the outer cover (32) which faces the distal end (10a) of sensor element (10). Thus, the unburned substances flow in parallel with the gas hole (23).

As a result, the oxygen concentration sensor of the present invention is superior to the above-described conventional sensor due to the elimination of gas holes (524) on the side wall (5322) of the outer cover (532), in the following points:
i) an amount of the unburned substances deposited in the vicinity of the gas hole (23) of the outer cover (32) can be reduced greatly; and
ii) an amount of the unburned substances passing through the gas hole (23) and entering inside the outer cover (32) can be reduced greatly.

As an effect of the above-described point (i), it becomes possible to prevent the response of the oxygen concentration sensor (1) from being worsened because an effective opening area of the gas hole (23) of outer cover (32) is surely maintained.

As an effect of the above-described point (ii), it becomes possible to eliminate a deposition of the unburned substances on the surface of the inner cover (31). Furthermore, it becomes possible to prevent the unburned substances from burning on the surface of the inner cover (31). In other words, an abnormal detection of a sensor value is no longer produced from the sensor element (10) due to elimination of such a deposition or burning of the unburned substances on the inner cover (31). In addition, as an effect of the above-described point (ii), a deterioration of the sensor element (10) can be effectively delayed because of very few amount of the unburned substances reaching the surface of sensor element (10) after passing through the gas holes (21, 22) of the inner cover (32).

According to features of the preferred embodiments of the present invention, the bottom (311) of the inner cover (31) is spaced from the bottom (321) of the outer cover (32) in an axial direction of the sensor element by a predetermined distance. This arrangement brings the following effects:
iii) even if any unburned substance enters inside the outer cover (32) through the gas hole (23) opened at the bottom (321), a traveling path for the unburned substance to reach the inner cover (31) is significantly large; and
iv) even if any moisture component involved in the gas enters inside the outer cover (32) through the gas hole (23) opened at the bottom (321), a traveling path for the moisture component to reach the inner cover (31) is significantly large.

As an effect of the above-described point (iii), a deposition of the unburned substances on the surface of the inner cover (31) can be effectively suppressed and an abnormal sensor value is no longer produced from the sensor element (10). Furthermore, invasion of the unburned substances to the surface of the sensor element (10) can be further suppressed. Deterioration of sensor element (10) can be further delayed. Furthermore, as an effect of the above-described point (iv), invasion of moisture component to the surface of the inner cover (31) or inside the inner cover (31) can be suppressed effectively. In other words, the sensor element (10) is surely isolated from water. This is effective to prevent the heated sensor element (10) from causing a crack by cool water.

According to another feature of the preferred embodiments of the present invention, an entire area of the gas hole (21) opened on the bottom (311) of the inner cover (31) is smaller than an entire area of the gas hole (23) opened on the bottom (321) of the outer cover (31). With this arrangement, the gas tends to settle or reside in a space formed between the bottom (321) of the outer cover (31) and the bottom (311) of the inner cover (31). Thus, the unburned substances involved in the gas can be effectively trapped in this space. Therefore, the amount of the unburned substances deposited on the surface of the inner cover (31) can be further reduced. The invasion of the unburned substances inside the inner cover (31), i.e., the deposition of the unburned substances on the sensor element (10) can be further reduced. Therefore, the sensor element (10) does not generate an erroneous sensing value and is free from a crack.

According to another feature of the preferred embodiments of the present invention, a cylindrical side wall (321) of the inner cover (31) is spaced from a cylindrical side wall (322) of the outer cover (32) in a direction normal to the axial direction of the sensor element by a predetermined distance. Thus, a vacant space (S) is formed between the cylindrical side wall (312) of the inner cover (31) and the cylindrical side wall (322) of the outer cover (32). The vacant space thus formed has a capability of improving the heat retaining property of the sensor element (10).

According to another feature of the preferred embodiments of the present invention, the above-described vacant space (S) is isolated from the intake or exhaust gas. Thus, the heat retaining property of the sensor element (10) can be further improved.

According to another feature of the preferred embodiments of the present invention, the sensor element (10) has a reacting portion (12a) of an external electrode (12) on an outer cylindrical surface of the distal end (10a) of an element body (13) constructed into an elongated shape.The gas hole (22) of the inner cover (31) is formed on the cylindrical side wall (312) of the inner cover (31) in a region other than a specific region facing the reacting portion (12a).

With this arrangement, the traveling path of the gas extending from the gas hole (22) of the inner cover (31) to the reacting portion (12a) becomes a maze or labyrinth arrangement. The invasion of the gas to the surface of the sensor element (10) can be suppressed.

The reacting portion (12a) and its vicinity (collectively referred to as output section) of the sensor element (10) is an essential portion causing an output current whose change is detected as a sensor output. Therefore, it is very important to make sure that the temperature of the reacting portion (12a) is maintained at a value exceeding the above-described active temperature. In this respect, the above-described arrangement is effective to prevent the surface of the sensor element (10) from being directly exposed to the gas having a temperature lower than the above-described active temperature. Thus, the heat retaining property of the reacting portion (12a) can be improved. The output section of the sensor element (10) can be maintained at a value exceeding the active temperature. The oxygen concentration of the gas can be accurately detected. Furthermore, invasion of the gas to the reacting portion (12a) of the sensor element (10) can be surely prevented. The deposition of the unburned substances involved in the gas can be suppressed. The deterioration of the reacting portion (12a) can be delayed.

According to another feature of the preferred embodiments of the present invention, the gas hole (22) of the inner cover (31) is opened only at the cylindrical side wall (312) of the inner cover (31). This realizes a maze arrangement for the gas passage extending from the gas hole (23) opened on the bottom (321) of the outer cover (32) to the gas hole (22) of the inner cover (31), bringing the following effects:
v) Even if any unburned substance enters inside the outer cover (32) through the gas hole (23) opened on the bottom (321), an amount of the unburned substance passing through the gas hole (22) opened on the inner cover (31) can be reduced. In other words, a substantial deposition of the unburned substances on the sensor element (10) can be reduced and the deterioration of the sensor element (10) can be delayed.
ii) Even if any moisture component involved in the gas enters inside the outer cover (32) through the gas hole (23) opened at the bottom (321), an amount of the moisture component passing through the gas hole (22) opened on the inner cover (31) can be reduced. In other words, the sensor element (10) is prevented from being exposed to water and causing a crack by cold water.

According to another feature of the preferred embodiments of the present invention, the sensor element (10) has a reacting portion (12a) of the external electrode (12) on the outer cylindrical surface of the distal end (10a) of the element body (13) constructed into an elongated shape. And, the gas hole (21) of the inner cover (31) is formed only at the bottom (311) of the inner cover (31).

With this arrangement, the traveling path of the gas extending from the gas hole (22) of the inner cover (31) to the reacting portion (12a) becomes a maze arrangement. Invasion of the gas to the reacting portion (12a) can be suppressed. That is, it becomes possible to prevent the reacting portion (12a) from being directly exposed to the gas. Therefore, the heat retaining property of the output section of the sensor element (10) can be further improved. The output section of the sensor element (10) can be maintained at a value exceeding the active temperature. The oxygen concentration of the gas can be accurately detected. Furthermore, the deposition of the unburned substances on the surface of the reacting portion (12a) can be suppressed. The deterioration of the reacting portion (12a) can be delayed.

According to another feature of the preferred embodiments of the present invention, the sensor element (10) may be a current-limiting or pump-current type.

According to another feature of the preferred embodiments of the present invention, the sensor element (10) detects the oxygen concentration of the intake or exhaust gas in a diesel engine. In general, the intake or exhaust gas of the diesel engine contains a great amount of unburned substances (tin etc.) compared with the gas of the gasoline engine. By applying the present invention to detect the oxygen concentration of the gas in the diesel engine, the deposition of the unburned substances on the surface of the inner cover (31) and the surface of the sensor element (10) can be effectively suppressed.

### BRIEF DESCRIPTION OF THE DRAWINGS

The above and other objects, features and advantages of the present invention will become more apparent from the following detailed description which is to be read in conjunction with the accompanying drawings, in which:
Fig. 1A is a vertical cross-sectional view showing an oxygen concentration sensor in accordance with a first embodiment of the present invention;
Fig. 1B is an enlarged vertical cross-sectional view showing a distal end part of a sensor element shown in Fig. 1A;
Fig. 2A is an enlarged vertical cross-sectional view showing the distal end part of the sensor element and inner and outer covers of the oxygen concentration sensor in accordance with the first embodiment of the present invention;
Fig. 2B is a transverse cross-sectional view showing the oxygen concentration sensor in accordance with the first embodiment of the present invention, taken along a line A-A of Fig. 1A;
Fig. 3 is a view illustrating the places where the oxygen concentration sensors of the first embodiment are installed;
Fig. 4A is a vertical cross-sectional view showing a distal end part of an oxygen concentration sensor in accordance with a second embodiment of the present invention;
Fig. 4B is a transverse cross-sectional view showing the oxygen concentration sensor taken along a line C-C of Fig. 4A;
Fig. 5A is a vertical cross-sectional view showing a distal end part of an oxygen concentration sensor in accordance with a third embodiment of the present invention;
Fig. 5B is a transverse cross-sectional view showing the oxygen concentration sensor taken along a line D-D of Fig. 5A;
Fig. 6A is a vertical cross-sectional view showing a distal end part of an oxygen concentration sensor in accordance with a fourth embodiment of the present invention;
Fig. 6B is a transverse cross-sectional view showing the oxygen concentration sensor taken along a line E-E of Fig. 6A;
Fig. 7 is a vertical cross-sectional view showing a distal end part of an oxygen concentration sensor in accordance with a fifth embodiment of the present invention;
Fig. 8 is a plan view showing a bottom of an outer cover of an oxygen concentration sensor in accordance with a sixth embodiment of the present invention;
Fig. 9A is a vertical cross-sectional view showing a distal end part of a conventional oxygen concentration sensor; and
Fig. 9B is a transverse cross-sectional view showing the conventional oxygen concentration sensor taken along a line F-F of Fig. 9A.

### DESCRIPTION OF THE PREFERRED EMBODIMENTS

Preferred embodiments of the present invention will be explained hereinafter with reference to accompanied drawings. Identical parts are denoted by the same reference numerals throughout the drawings.

### First embodiment

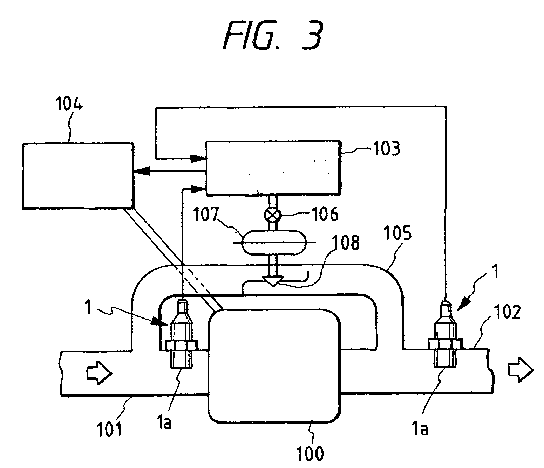

Fig. 3 shows two oxygen concentration sensors 1 installed in an intake and exhaust system of a diesel engine 100 for an automotive vehicle in accordance with a first embodiment of the present invention. One oxygen concentration sensor 1 is provided in an intake pipe 101 of the diesel engine 100. The other oxygen concentration sensor 1 is provided in an exhaust pipe 102 thereof. Each oxygen concentration sensor 1 extends perpendicular from a wall surface of the corresponding pipe 101 or 102. A distal end 1a of the oxygen concentration sensor 1 faces downward.

An oxygen concentration of intake gas is detected by the sensor 1 provided in the intake pipe 101, and the detected value is entered into an electric control apparatus 103. Based on the input datum thus entered, an exhaust gas flow amount in a gas recirculation pipe 105 is controlled. On the other hand, an oxygen concentration of exhaust gas is detected by the sensor 1 provided in the exhaust pipe 102, and the detected value is entered into the electric control apparatus 103. Based on this input datum, a fuel supply amount injected from an injection pump 104 is controlled.

The gas recirculation pipe 105 has a function of recirculating exhaust gas from the exhaust pipe 102 to the intake pipe 101. An electromagnetic valve 106 is provided in a negative pressure circuit to control the negative pressure. A diaphragm 107, having a negative pressure chamber on one side, is displaceable in an up-and-down direction in accordance with the activation of the electromagnetic valve 106. An exhaust gas recirculation valve 108, attached to the other side of diaphragm 107, has a function of controlling the exhaust gas recirculation amount. The exhaust gas recirculation valve 108 opens or closes an opening in the gas recirculation pipe 105.

The oxygen concentration sensor 1, as shown in Fig. 1A to 2B, has an elongated sensor element 10 constructed into a cup-like shape with a circular cross section. A heater unit 20 is accommodated in the inside space of sensor element 10. The temperature of the sensor element 10 is increased up to its active temperature (e.g., 650°C) by the heat generated from this heater unit 20. A holder 41, supporting the sensor element 10, is provided at a base end 10b of the sensor element 10 (i.e., an opening side of the cup-like shape) . A distal end 10a of the sensor element 10 protrudes outside the holder 41. An element cover 3 is attached to the lower end of the holder 41. The element cover 3 surrounds a gas-sensing portion 11 provided at the distal end 10a of the sensor element 10.

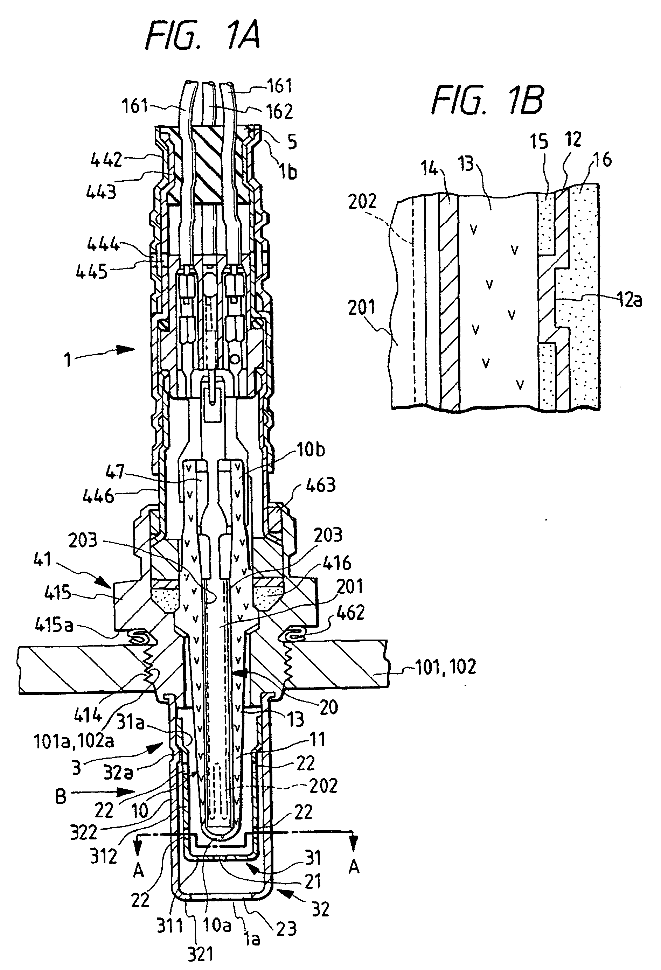

The sensor element 10 is made of a solid electrolyte having a preferable oxygen ion conductivity, which is preferably a so-called limiting-current detecting-type sensor element. An element body 13 of the sensor element 10 is constructed into an elongated cup-like shape with a circular cross section. An internal electrode 14 (refer to Fig. 1B) is formed on an inner cylindrical surface of the element body 13. An external electrode 12 (refer to Fig. 1B) is formed on an outer cylindrical surface of the element body 13. Furthermore, the sensor element 10 comprises an insulating layer 15 and a diffused resistor layer 16, sandwiching the external electrode 12 as shown in Fig. 1B. There is a belt-like region 130 where the insulating layer 15 is not provided. This belt-like region 130, having an axial width of approximately 5.0 mm, serves as a reacting portion 12a of the external electrode 12.

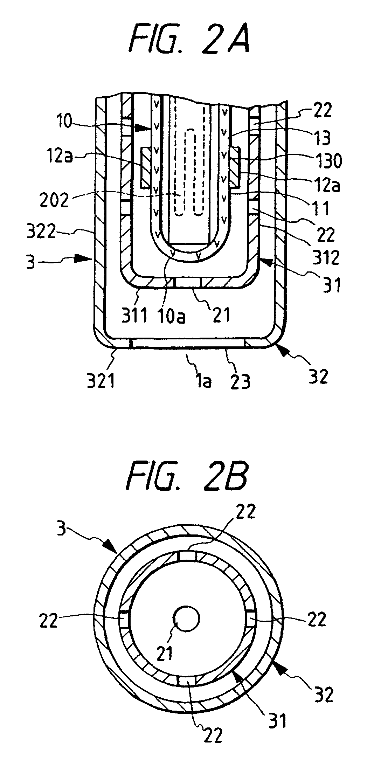

Fig. 2A shows the distal end 10a of the sensor element 10 and inner and outer covers 31 and 32 of the oxygen concentration sensor 1. In this drawing, the insulating layer 15 and the diffused resistor layer 16 are omitted to simply showing the reacting portion 12a only.

The heater unit 20 comprises a ceramic body 201 that houses a heater 202 made of tungsten (i.e., a comblike portion in Fig. 1) and lead lines 203. The heater 202 is disposed at the distal end 10a of the sensor element 10, at a portion substantially facing the reacting portion 12a (i.e., the belt-like region 130). Thus, the sensor body 13 is heated by the heater 202, chiefly at the portion where the reacting portion 12a of the external electrode 12 (i.e., output section of sensor element 10) is formed. This heater unit 20 is held via a retainer 47 by the base end 10b of the sensor element 10.

The element cover 3 is provided with gas holes 21, 22 and 23 for intake or exhaust gas (hereinafter, simply referred to gas). These gas holes 21, 22 and 23 allow the gas to pass through the element cover 3 from inside to outside or vice versa. The element cover 3 comprises an inner cover 31 disposed closely to the gas-sensing portion 11 and an outer cover 32 disposed outside this inner cover 31 and directly exposed to the gas. Each of inner and outer covers 31 and 32 is constructed into a cup-like shape with a circular cross section. Bottoms 311 and 321 of respective covers 31 and 32 are flat and face the distal end 10a of the sensor element 10.

Only one circular bottom gas hole 21 is opened on the bottom 311 of the inner cover 31, while only one circular bottom gas hole 23 is opened on the bottom 321 of the outer cover 32. These bottom gas holes 21 and 23 are located on axes of the inner and outer cylindrical covers 31 and 32, respectively. An entire area of the bottom gas hole 21 formed on the inner cover 31 is smaller than an entire area of the bottom gas hole 23 formed on the outer cover 32.

A total of eight circular side gas holes 22 are opened on a cylindrical side wall 312 of inner cover 31, in an arrangement of two rows arrayed in the axial direction each row comprising four gas holes disposed in a circumferential direction with equal angular intervals (refer to Fig. 2B).

More specifically, the side gas holes 22 are provided on a limited region on the cylindrical side wall 312 other than a region confronting with the reacting portion 12a. No gas holes are provided on a cylindrical side wall 322 of outer cover 32. Thus, each of the above-described gas holes 21, 22 and 23 has a circular opening for allowing the gas to enter from the outside to the inside of the element cover 3 or exit from the inside to the outside.

The opened end of the outer cover 32 of element cover 3 is fixed to the holder 41 by caulking. An outer cylindrical surface of the opened end side of inner cover 31 is welded with an inner cylindrical surface of the corresponding opened end side of the outer cover 32. The inner cover 31 is formed with a shoulder portion 31a. With the provision of this shoulder portion 31a, the diameter of the opened end side of the inner cover 31 is enlarged by an amount equivalent to the radial size of the shoulder portion 31a. A plurality of arc grooves or recesses 32a, each being recessed radially inward, are provided on the outer cover 32 along a circular line corresponding to the shoulder portion 31a. According to the present embodiment, three grooves 32a are aligned along the shoulder portion 31a (only one recess 32a is shown in Fig. 1). In other words, the shoulder portion 31a is supported from outside by these recesses 32a. In this manner, the inner cover 31 is fixed at a predetermined position inside the outer cover 32.

The bottom 311 of inner cover 31 is spaced from the bottom 321 of outer cover 32 in the axial direction by a predetermined distance (e.g., approximately 4.5 mm, preferably 5.0 mm or more). Furthermore, the cylindrical side wall 312 of inner cover 31 is spaced from the cylindrical side wall 322 of outer cover 32 in a direction normal to the axial direction by a predetermined distance (e.g., approximately 1.0 mm, preferably 2.0 mm or more).

The element cover 3 has a function of preventing the sensor element 10 from being exposed to moisture component or harmful substances, such as lead compound, contained in the gas. The gas temperature is lower than the active temperature of the sensor element 10. In general, the temperature of the intake gas is in a range of 80-140 °C, while the temperature of the exhaust gas is in a range of 100-500 °C. Thus, the element cover 3 has a function of keeping the sensor element 10 warm. The sensor element 10 is heated by the heater unit 20. The element cover 3 has a double-wall construction comprising inner cover 31 and outer cover 32. This arrangement is advantageous to ensure the heat retaining property of the element cover 3.

The holder 41 comprises a screw thread 414 engaged with a screw hole 101a of intake pipe 101 or a screw hole 102a of exhaust pipe 102. A flange 415 of the holder 41 has a function of positioning the oxygen concentration sensor 1 to the intake pipe 101 or exhaust pipe 102. A gasket 462 is interposed between the flange 415 and the intake pipe 101 or exhaust pipe 102. The holder 41 is detachably connected to the intake pipe 101 or exhaust pipe 102 by means of appropriate fastening member, such as screws.

The oxygen concentration sensor 1 has a base end 1b provided with cover members 442, 443 and 446. The opening of the holder 41 is fixed with the cover member 446 via a metallic ring 463. Atmospheric holes 444 and 445 are opened on these cover members 442 and 443, for introducing air inside these cover members 442 and 443.

A water-repellant filter (not shown) is provided in an atmospheric path defined by these atmospheric holes 444 and 445. The air, once introduced through these atmospheric holes 444 and 445, is guided into the sensor element 10 via the remaining part of the atmospheric path.

The internal electrode 14 and the external electrode 12 are electrically connected to one ends of signal output leads 161 and 161, respectively. The above-described lead lines 203 of the heater unit 20 are electrically connected to one ends of power feeders 162. Both of the signal output leads 161 and the power feeder 162 are fixed to the cover members 442 and 443 via a bush 5. The other ends of the signal output leads 161 are electrically connected to a data reading section incorporated in the electric control apparatus 103. The other ends of the power feeders 162 are electrically connected to an electric power source incorporated in the electric control apparatus 103.

In designing the components of the above-described oxygen concentration sensor 1, important points are to prevent the sensor element 10 from contacting with water, harmful substances and unburned substances, to maintain adequate heat retaining property of sensor element 10, and to assure the response to the sensor element 10. The configuration and size of the element cover 3 are determined considering the configuration and size of sensor element 10. The positions and diameters of the gas holes 21, 22, and 23 are determined in the same manner.

More specifically, the inner cover 31 has an outer diameter of 9.0 mm and an inner diameter of 8.0 mm. The diameter of the bottom gas hole 21 of the inner cover 31 is 2.0 mm. The diameter of side gas hole 22 is 1.5 mm. The outer cover 32 has an outer diameter of 12.0 mm and an inner diameter of 11.0 mm. The diameter of the bottom gas hole 23 of the outer cover 32 is 8.0 mm. The bottom gas hole 21 is spaced 30.0 mm from a (lower) surface 415a of the flange 415 of the holder 41, this surface 415a being closer to the element cover 3 than the other (upper) surface of the flange 415. Regarding the side gas holes 22, two rows of gas holes 22 are respectively spaced 18.0 mm and 26.5 mm from the above-described surface 415a at their centers. The bottom gas hole 23 is spaced 35.0 mm from the above-described surface 415a.

According to the inventors of the present invention, it was confirmed that the above-described oxygen concentration sensor 1 demonstrated an excellent response level of detecting a change of oxygen concentration within 0.1 sec. More specifically, the oxygen concentration sensor 1 is installed in a pipe, into which two kinds of airs having 20% and 15% oxygen concentrations are selectively supplied. As a response of this sensor 1, a duration is measured from the moment the air is switched from the 20% 02 air to the 15% 02 air or vice versa to the moment any change is detected in the oxygen concentration.

Next, functions and effects brought by the oxygen concentration sensor 1 of the present embodiment will be explained.

First, a flowing direction (i.e., the direction of arrow B shown in Fig. 1A) of the above-described unburned substances is perpendicular to the side wall 322 of outer cover 32. The bottom gas hole 23 of the outer cover 32 is formed on the bottom 321 confronting the distal end 10a of the sensor element 10. Thus, the unburned substances flow in parallel with the bottom gas hole 23.

As a result, the oxygen concentration sensor 1 of the present embodiment is superior to the above-described conventional sensor due to the elimination of the side gas holes 524 on the side wall 5322 of the outer cover 532, in the following points:
i) an amount of the unburned substances deposited in the vicinity of the gas hole of outer cover 32 (i.e., bottom gas hole 23) can be reduced greatly; and
ii) an amount of the unburned substances passing through the gas hole 23 and entering inside the outer cover 32 can be reduced greatly.

As an effect of the above-described point (i), it becomes possible to eliminate the problem that an effective opening area of the bottom gas hole 23 may be reduced or completely closed. Thus, the deterioration of the response of the sensor element 10 can be prevented. The diameter (or opening area) of the bottom gas hole 23 can be enlarged by an amount equivalent to an eliminated area of the side gas holes (524 in Fig. 9A) on the outer cover 32, while maintaining the heat retaining property of the sensor element 10 at the same level as that of the above-described prior art.

As an effect of the above-described point (ii), it becomes possible to eliminate a deposition of the unburned substances on the surface of the inner cover 31. Furthermore, it becomes possible to prevent the unburned substances from burning on the surface of the inner cover 31. Thus, the sensor element 10 no longer generates an erroneous sensing value. In addition, as another effect of the above-described point (ii), a deterioration of the sensor element 10 can be effectively suppressed in view of the fact that very few amount of the unburned substances can reach the surface of the sensor element 10 after passing through the gas holes 21, 22 of the inner cover 32.

As the diameter of the bottom gas hole 23 can be enlarged compared with that of the prior art, the response of the sensor element 10 can be maintained at the same level as the conventional one.

Similarly, a flowing direction of the harmful substances, such as lead compound, involved in the gas is perpendicular to the side wall 322 of outer cover 32. As the bottom gas hole 23 of the outer cover 32 is formed on the bottom 321 confronting the distal end 10a of the sensor element 10, the harmful substances flow in parallel with the bottom gas hole 23. As a result, an amount of the unburned substances entering from the bottom gas hole 23 of outer cover 32 can be effectively reduced. It becomes possible to eliminate an amount of harmful substances deposited on the sensor element 10. Thus, the deterioration of sensor element 10 can be suppressed effectively.

Yet further, the bottom 311 of the inner cover 31 is spaced from the bottom 321 of the outer cover 32 in an axial direction of the sensor element by the above-described predetermined amount. This arrangement brings the following effects.
iii) Even if any unburned substance enters inside the outer cover 32 through the bottom gas hole 23 of the outer cover 32, a traveling path for the unburned substance to reach the surface of the inner cover 31 is significantly large. This is effective to prevent the unburned substances from reaching the surface of the inner cover 31.
iv) Even if any moisture component enters inside the outer cover 32 through the bottom gas hole 23, a traveling path for the moisture component to reach the inner cover 31 is significantly large. This is effective to prevent the water from reaching the sensor element 10.

As a result of the above-described point (iii), it becomes possible to further eliminate the amount of the unburned substances deposited on the surface of the inner cover 31 or the sensor element 10. The abnormal detection and the deterioration of the sensor element 10 can be further suppressed. As a result of the above-described point (iv), the surface of the inner cover 31 or the surface of the sensor element 10 is prevented from being exposed to water. The heated sensor element 10 can be effectively prevented from being cracked by cool water. To ensure the above-described effects of the above-described point (iii) and (iv), the above-described axial distance of the present invention is approximately 4.5 mm, preferably 5.0 mm or more.

Furthermore, the entire area of bottom gas hole 21 formed on the inner cover 31 is smaller than the entire area of the bottom gas hole 23 formed on the outer cover 32. With this arrangement, the gas tends to reside in a space between the bottom 321 of outer cover 32 and the bottom 311 of inner cover 31. In other words, the unburned substances contained in the gas can be trapped in this space. Accordingly, the amount of the unburned substances deposited on the surface of inner cover 31 or the sensor element 10 can be further effectively reduced.

Still further, the cylindrical side wall 321 of the inner cover 31 is spaced from the cylindrical side wall 322 of the outer cover 32 in a direction (i.e., radial direction) normal to the axial direction of the sensor element 10 by the above-described predetermined distance. Thus, a vacant space is formed between the cylindrical side wall 312 of the inner cover 31 and the cylindrical side wall 322 of the outer cover 32. The vacant space thus formed has a capability of improving the heat retaining property of the sensor element 10 whose temperature is increased up to the above-described active temperature.

According to this embodiment, the above-described radial distance is approximately 1. 0 mm, preferably 2.0 mm or more.

Furthermore, the gas hole 22 of the inner cover 31 is formed on the cylindrical side wall 312 of the inner cover 31 in a region other than a specific region facing the reacting portion 12a (refer to Fig. 2A). The traveling path of the gas, reaching from the side gas hole 22 of the inner cover 31 to the reacting portion 12a, become a maze arrangement. This is effective to prevent the gas from reaching the surface of the reacting portion 12a of the sensor element 10.

Accordingly, it becomes possible to improve the heat retaining property of the sensor element 10 at or in the vicinity of the reacting portion 12a serving as the output section of the sensor element 10. Thus, the output section of the sensor element 10 can be adequately maintained at the active temperature. The oxygen concentration can be accurately detected. Furthermore, it becomes possible to suppress the amount of the unburned substances deposited on the surface of reacting portion 12a. Thus, the reacting portion 12a, is prevented from being deteriorated.

### Second embodiment

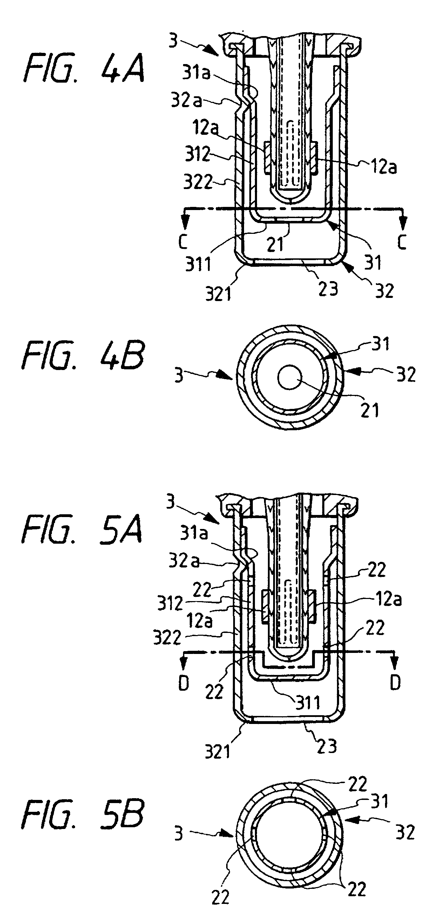

As shown in Fig. 4, a second embodiment is different from the first embodiment in that the side gas holes 22 (referred to Fig. 1) are eliminated from the inner cover 31. In other words, the inner cover 31 is provided with gas hole 21 on the bottom 311. Thus, the diameter (or opening area) of the bottom gas hole 21 of the inner cover 31 can be further enlarged compared with that of the first embodiment by an amount equivalent to an eliminated area of the side gas holes 22. Thus, the response of the sensor element 10 can be maintained at the same level as that of the first embodiment. According to the second embodiment, the bottom gas hole 21 has a diameter of approximately 3.5 mm.

With the above-described embodiment, the traveling path of the gas reaching the reacting portion 12a becomes a maze arrangement. It becomes possible to prevent the gas from reaching the surface of the reacting portion 12a of the sensor element 10. Thus, the heat retaining property of the output section of the sensor element 10 is improved. The temperature of the output section of sensor element 10 can be adequately maintained at the active temperature. The oxygen concentration can be accurately detected. The amount of the unburned substances deposited on the surface of the reacting portion 12a can be suppressed. Thus, deterioration of the reacting portion 12a can be delayed.

According to this embodiment, the side wall 312 of the inner cover 31 is closer to the output section of the sensor element 10 than the bottom 311 of the inner cover 31. Thus, the heat retaining property of the output section of the sensor element 10 can be effectively improved by forming the gas hole only on the bottom 311.

### Third embodiment

As shown in Fig. 5, a third embodiment is different from the first embodiment in that the bottom gas holes 21 (referred to Fig. 1) is eliminated from the inner cover 31. In other words, the inner cover 31 is provided with the gas holes 21 only at the side wall 312. This provides a maze arrangement for the gas passage extending from the bottom 321 of the outer cover 32 to the side gas hole 22 of the inner cover 31. Thus, even if the unburned substances involved in the gas enter inside the outer cover 32 via the bottom gas hole 23, it is possible to prevent the unburned substance from reaching the gas holes 22 of the inner cover 31.Thus, a substantial deposition of the unburned substances on the sensor element 10 can be further reduced, and the deterioration of sensor element 10 is effectively prevented.

Moreover, even if the moisture component involved in the gas enters inside the outer cover 32 from the bottom gas hole 23, it is possible to prevent the water from reaching the gas holes 22 of the inner cover 31. Thus, it becomes possible to prevent the sensor element 10 from causing a crack by cool water.

### Fourth embodiment

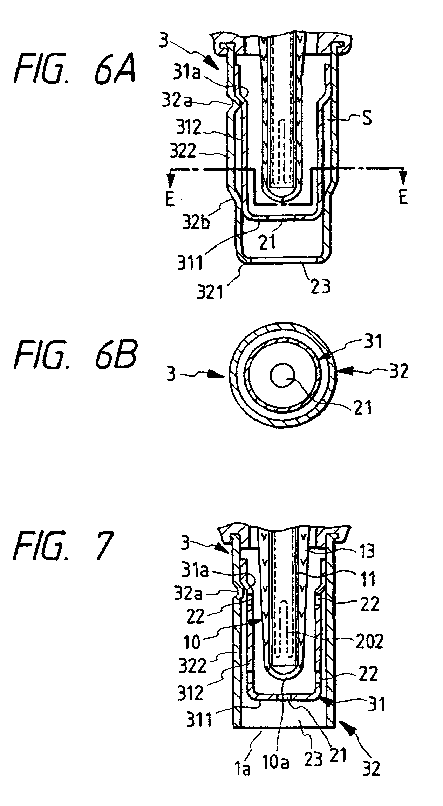

As shown in Fig. 6, a fourth embodiment is different from the second embodiment in that another shoulder 32b is provided annularly on the side wall 322 of the outer cover 32 slightly offset toward the opened end side from the bottom 311 of inner cover 31. A diameter of the outer cover 32 is reduced at the bottom 321 side by the provision of this shoulder 32b. More specifically, an inner diameter of the outer cover 32 at the bottom 321 side is slightly larger than or substantially equal to an outer diameter of the inner cover 31 at the bottom 311 side. With this arrangement, an air space S is formed between the cylindrical side wall 312 of inner cover 31 and the cylindrical side wall 322 of outer cover 32. The thus formed air space S is substantially isolated from the outside. As a result, the heat resisting property of sensor element 10 is further improved.

Furthermore, the gas, once introduced into the outer cover 32 through the bottom gas hole 23, is directly introduced into the inner cover 31 through the bottom gas hole 21 thereof. Accordingly, as the response of sensor element 10 can be further improved compared with the second embodiment where the gas is partly guided to the outer peripheral portion of the inner cover 31.

### Fifth embodiment

As shown in Fig. 7, a fifth embodiment of the present invention is characterized in that the bottom part (i.e., a portion facing the distal end 10a of the sensor element 10) of the outer cover 32 is entirely removed to form a large gas hole 23. By enlarging the opening of the bottom gas hole 23, the gas can be smoothly introduced inside the outer cover 32.

### Sixth embodiment

As shown in Fig. 8, a sixth embodiment of the present invention is characterized in that a plurality of (e.g., three) gas holes 23 are opened on the bottom 321 of the outer cover 32. The outer cover 32 has an outer diameter of 12.0 mm and an inner diameter 11.0 mm. Each of the bottom gas holes 23 has a diameter of 2.3 mm. The center of each gas hole 23 is spaced 3.8 mm from the center of the bottom 321 of outer cover 32. By providing a plurality of bottom gas holes 23, the gas can be smoothly introduced inside the outer cover 32.

### Other embodiments

Each of the above-described embodiments is based on the element cover 3 comprising inner cover 31 and outer cover 32 in a double-wall construction. However, it is possible to interpose an intermediate cover between the inner cover 31 and outer cover 32.

Furthermore, the above-described bottom gas holes 21 and 23 opened on the inner and outer covers 31 and 32 are disposed on the axes thereof. However, it is possible to offset each gas hole from the axis. With this offset, the gas passage extending from the bottom gas hole 23 of outer cover 32 to the bottom gas hole 21 of inner cover 31 can be elongated. This is advantageous to eliminate a deposition of the unburned substances on the sensor element 10 or to prevent the sensor element 10 from being exposed to water.

Yet further, both of the above-described bottoms 311 and 321 of the inner and outer element covers 31 and 32 are flat. However, these bottoms 311 and 321 can be configured into a curved shape if desirable. Still further, each of the above-described gas holes 21, 22 and 23 is circular. Needless to say, a rectangular or other shape will be acceptable for each gas hole.

Furthermore, according to the sixth embodiment of the present invention, a plurality of bottom gas holes 23 are provided on the outer cover 32. Alternatively, it is desirable to provide a plurality of bottom gas holes 21 on the inner cover 31. It is further possible to provide a plurality of bottom gas holes on each of the outer cover 32 and inner cover 31. The number of bottom gas holes 21 and 23 can be reduced to two or increased to four or more.

Furthermore, the heater unit 20 can be formed integrally with the sensor element 10. Either one of oxygen concentration sensors 1, installed in the intake 101 or exhaust pipe 102 can be omitted.

The above-described oxygen concentration sensors 1 are disposed perpendicularly to the wall surface of the intake and exhaust pipes 101 and 102. Accordingly, the intake or exhaust gas hits the distal end side of each oxygen concentration sensor 1 in a direction normal to the axis of the sensor 1. However, an angle of the sensor 1 relative to the wall surface of the pipe 101 or 102 can be slightly changed from the 90 degrees, Especially, when the sensor 1 is inclined toward a downstream side, the gas can smoothly flow from the upstream side to the downstream side of the sensor body. This is effective to reduce the deposition of the unburned substances in the vicinity of the bottom gas hole 23 of outer cover 32, and to reduce the amount of unburned substances passing through the bottom gas hole 23.

Yet further, in each of the above-described embodiment, the oxygen concentration sensor 1 is applied to the diesel engine 100. It is possible to the oxygen concentration sensor 1 can be applied to any other system, such as an exhaust gas system for a generator engine utilizing natural gas, which contains many substances depositing on the element cover 3.

Moreover, the above-described embodiments disclose the current-limiting type sensor element 10. It is however possible to adopt another type sensor element, such as a pump-current type (i.e., concentration cell type) or a semiconductor type sensor element.

## Claims

1. An oxygen concentration sensor comprising: a sensor element (10) constructed into an elongated shape with a distal end (10a) having a gas-sensing portion (11) to be exposed to intake or exhaust gas for detecting an oxygen concentration of said intake or exhaust gas; a heater unit (20) disposed adjacent to said sensor element (10) and heating said sensing element (10); an inner element cover (31) disposed closely to said gas-sensing portion (11) of said sensor element (10); an outer element cover (32) disposed outside said inner
element cover (31); each of said inner and outer element covers (31, 32) being constructed into a cup-like shape with a bottom (311, 321) that faces said distal end (10a) of said sensor element (10);
at least one gas hole (21, 22, 23) opened on each of said inner and outer element covers (31, 32) to allow said intake or exhaust gas to pass through said inner and outer element covers (31, 32);
**characterized in that**
said at least one gas hole (23) of said outer element cover (32) is provided on said bottom (321) of said outer element cover (32) and no gas hole is provided on a cylindrical side wall (322) of said outer element cover (32).

2. The oxygen concentration sensor in accordance with claim 1, wherein the bottom (311) of said inner element cover (31) is spaced from the bottom (321) of said outer element cover (32) in an axial direction of said sensor element by a predetermined distance.

3. The oxygen concentration sensor in accordance with claim 2, wherein a total area of the gas hole (23) provided on the bottom (321) of said outer element cover (32) is larger than a total area of the gas hole provided on the bottom (311) of said inner element cover (31).

4. The oxygen concentration sensor in accordance with any one of claims 1 to 3, wherein a cylindrical side wall (312) of said inner element cover (31) is spaced from the cylindrical side wall (322) of said outer element cover (32) in a direction normal to the axial direction of said sensor element by a predetermined distance.

5. The oxygen concentration sensor in accordance with claim 4, wherein a vacant isolated space (S) is formed between the cylindrical side wall (312) of said inner element cover (31) and the cylindrical side wall (322) of said outer element cover (32).

6. The oxygen concentration sensor in accordance with any one of claims 1 to 5, wherein said sensor element (10) has a reacting portion (12a) of an external electrode (12) on an outer cylindrical surface of a distal end (10a) of an element body (13) constructed into an elongated shape; and
the gas hole (22) of said inner element cover (31) is formed on said cylindrical side wall (312) of said inner element cover (31) in a region other than a specific region facing said reacting portion (12a).

7. The oxygen concentration sensor in accordance with any one of claims 1, 2, 4 and 6, wherein said inner element cover (31) has no gas hole on the bottom (311) of said inner clement cover (31).

8. The oxygen concentration sensor in accordance with any one of claims 1 to 5, wherein said sensor element (10) has a reacting portion (12a) of an external electrode (12) on an outer cylindrical surface of a distal end (10a) of an element body (13) constructed into an elongated shape; and
said inner element cover (31) has no gas hole on the cylindrical side wall (312) of said inner element cover (31).

9. The oxygen concentration sensor in accordance with any one of claims 1 to 8, wherein said sensor element (10) is a current-limiting or pump-current type.

## Patentansprüche

1. Sauerstoffkonzentrationssensor, mit: einem Sensorelement (10), welches in einer länglichen Gestalt mit einem distalen Ende (10a) konstruiert ist, welches einen Gasfühlabschnitt (11) aufweist, welcher einem Ansauggas oder Abgas ausgesetzt wird, um eine Sauerstoffkonzentration des Ansauggases oder Abgases zu detektieren; einer Heizeinheit (20), die benachbart dem Sensorelement (10) angeordnet ist und die das Sensorelement (10) erhitzt; einer inneren Elementabdeckung (31), die dicht bei dem Gasfühlabschnitt (11) des Sensorelements (10) angeordnet ist; einer äußeren Elementabdeckung (32), die außerhalb der inneren Elementabdeckung (31) angeordnet ist; wobei jede der inneren und äußeren Elementabdeckungen (31, 32) in eine tassenförmige oder kappenförmige Gestalt mit einem Boden (311, 321) konstruiert ist, welcher dem distalen Ende (10a) des Sensorelements (10) gegenüber liegt;
wenigstens einem Gasloch (21, 22, 23), welches an jedem der inneren und äußeren Elementabdeckungen (31, 32) ausgebildet ist, um es dem Ansauggas oder Abgas zu ermöglichen, durch die innere und die äußere Elementabdeckung (31, 32) hindurch zu gelangen;
**dadurch gekennzeichnet, daß**
das wenigstens eine Gasloch (23) der äußeren Elementabdeckung (32) an dem Boden (321) der äußeren Elementabdeckung (32) vorgesehen ist, und daß keine Gasöffnung an einer zylinderförmigen Seitenwand (322) der äußeren Elementabdeckung (32) vorgesehen ist.

2. Sauerstoffkonzentrationssensor nach Anspruch 1, bei dem der Boden (311) der inneren Elementabdeckung (31) von dem Boden (321) der äußeren Elementabdeckung (32) in einer axialen Richtung des Sensorelements um eine vorbestimmte Strecke beabstandet ist.

3. Sauerstoffkonzentrationssensor nach Anspruch 2, bei dem ein Gesamtbereich bzw. Gesamtfläche des Gasloches (23), welches an dem Boden (321) der äußeren Elementabdeckung (32) vorgesehen ist, größer ist als ein Gesamtbereich bzw. Gesamtfläche des Gasloches, welches an dem Boden (311) der inneren Elementabdeckung (31) vorgesehen ist.

4. Sauerstoffkonzentrationssensor nach einem der Ansprüche 1 bis 3, bei dem eine zylinderförmige Seitenwand (312) der inneren Elementabdeckung (31) von der zylinderförmigen Seitenwand (322) der äußeren Elementabdeckung (32) in einer Richtung senkrecht zu der axialen Richtung des Sensorelements um eine vorbestimmte Strecke beabstandet ist.

5. Sauerstoffkonzentrationssensor nach Anspruch 4, bei dem ein isolierter Leerraum (S) zwischen der zylinderförmigen Seitenwand (312) der inneren Elementabdeckung (31) und der zylinderförmigen Seitenwand (322) der äußeren Elementabdeckung (32) ausgebildet ist.

6. Sauerstoffkonzentrationssensor nach einem der Ansprüche 1 bis 5, bei dem das Sensorelement (10) einen Reaktionsabschnitt (12a) einer externen Elektrode (12) an einer äußeren zylinderförmigen Fläche eines distalen Endes (10a) eines Elementkörpers (13) aufweist, der in einer länglichen Gestalt konstruiert ist; und
das Gasloch (22) der inneren Elementabdeckung (31) an der zylinderförmigen Seitenwand (312) der inneren Elementabdeckung (31) in einer Zone ausgebildet ist, die verschieden von einer spezifischen Zone ist, welche dem Reaktionsabschnitt (12a) gegenüber liegt.

7. Sauerstoffkonzentrationssensor nach einem der Ansprüche 1, 2, 4 und 6, bei dem die innere Elementabdeckung (31) kein Gasloch an dem Boden (311) der inneren Elementabdeckung (31) aufweist.

8. Sauerstoffkonzentrationssensor nach einem der Ansprüche 1 bis 5, bei dem das Sensorelement (10) einen Reaktionsabschnitt (12a) einer externen Elektrode (12) an einer äußeren zylinderförmigen Fläche eines distalen Endes (10a) eines Elementkörpers (13) aufweist, der in einer länglichen Gestalt konstruiert ist; und
die innere Elementabdeckung (31) kein Gasloch an der zylinderförmigen Seitenwand (312) der inneren Elementabdeckung (31) aufweist.

9. Sauerstoffkonzentrationssensor nach einem der Ansprüche 1 bis 8, bei dem das Sensorelement (10) aus einem strombegrenzenden Typ oder einem Pumpstromtyp besteht.

## Revendications

1. Capteur de concentration en oxygène comprenant : un élément de capteur (10) construit en une forme allongée avec une extrémité distale (10a) ayant une partie de détection de gaz (11) à exposer à un gaz d'admission ou d'échappement pour détecter une concentration en oxygène dudit gaz d'admission ou d'échappement ; une unité de réchauffeur (20) disposée adjacente audit élément de capteur (10) et chauffant ledit élément de capteur (10) ; une enveloppe d'élément intérieure (31) disposée de manière proche à ladite partie de détection de gaz (11) dudit élément de capteur (10) ; une enveloppe d'élément extérieure (32) disposée à l'extérieur de ladite enveloppe d'élément intérieure (31) ; chacune desdites enveloppes d'élément intérieure et extérieure (31, 32) étant construite en une forme similaire à une coupe avec une base (311, 321) qui est en regard de ladite extrémité distale (10a) dudit élément de capteur (10) ;
au moins un trou de gaz (21, 22, 23) ouvert sur chacune desdites enveloppes d'élément intérieure et extérieure (31, 32) pour permettre audit gaz d'admission ou d'échappement de passer à travers lesdites enveloppes d'élément intérieure et extérieure (31, 32) ;
**caractérisé en ce que**
ledit au moins un trou de gaz (23) de ladite enveloppe d'élément extérieure (32) est disposé sur ladite base (321) de ladite enveloppe d'élément extérieure (32) et aucun trou de gaz n'est disposé sur une paroi latérale cylindrique (322) de ladite enveloppe d'élément extérieure (32).

2. Capteur de concentration en oxygène selon la revendication 1, dans lequel la base (311) de ladite enveloppe d'élément intérieure (31) est espacée de la base (321) de ladite enveloppe d'élément extérieure (32) dans une direction axiale dudit élément de capteur sur une distance prédéterminée.

3. Capteur de concentration en oxygène selon la revendication 2, dans lequel une zone totale du trou de gaz (23) disposé sur la base (321) de ladite enveloppe d'élément extérieure (32) est plus grande qu'une zone totale du trou de gaz disposé sur la base (311) de ladite enveloppe d'élément intérieure (31).

4. Capteur de concentration en oxygène selon l'une quelconque des revendications 1 à 3, dans lequel une paroi latérale cylindrique (312) de ladite enveloppe d'élément intérieure (31) est espacée de la paroi latérale cylindrique (322) de ladite enveloppe d'élément extérieure (32) dans une direction normale à la direction axiale dudit élément de capteur sur une distance prédéterminée.

5. Capteur de concentration en oxygène en conformité avec la revendication 4, dans lequel un espace isolé vacant (S) est formé entre la paroi latérale cylindrique (312) de ladite enveloppe d'élément intérieure (31) et la paroi latérale cylindrique (322) de ladite enveloppe d'élément extérieure (32).

6. Capteur de concentration en oxygène selon l'une quelconque des revendications 1 à 5, dans lequel ledit élément de capteur (10) a une partie de réaction (12a) d'une électrode externe (12) sur une surface cylindrique externe d'une extrémité distale (10a) d'un corps d'élément (13) construit en une forme allongée ; et
le trou de gaz (22) de ladite enveloppe d'élément intérieure (31) est formé sur ladite paroi latérale cylindrique (312) de ladite enveloppe d'élément intérieure (31) dans une région autre qu'une région spécifique en regard de ladite partie de réaction (12a).

7. Capteur de concentration en oxygène selon l'une quelconque des revendications 1, 2, 4 et 6, dans lequel ladite enveloppe d'élément intérieure (31) ne comporte pas de trou de gaz sur la base (311) de ladite enveloppe d'élément intérieure (31).

8. Capteur de concentration en oxygène selon l'une quelconque des revendications 1 à 5, dans lequel ledit élément de capteur (10) comporte une partie de réaction (12a) d'une électrode externe (12) sur une surface cylindrique externe d'une extrémité distale (10a) d'un corps d'élément (13) construit en une forme allongée ; et
ladite enveloppe d'élément intérieure (31) ne comporte pas de trou de gaz sur la paroi latérale cylindrique (312) de ladite enveloppe d'élément intérieure (31).

9. Capteur de concentration en oxygène selon l'une quelconque des revendications 1 à 8, dans lequel ledit élément de capteur (10) est d'un type à limitation de courant ou à pompe à courant.
